# FASCICULE DE BREVET EUROPEEN

(11) **EP 0 930 826 B1**
(45) Date de publication et mention de la délivrance du brevet: **08.05.2002**
(21) Numéro de dépôt: 97937464.2
(22) Date de dépôt: 05.07.1997
(51) Int. Cl.: A23G 9/02

(54) **CREME GLACEE FOISONNEE AVEC ENROBAGE CONTENANT DES BACTERIES LACTIQUES**
BELÜFTETES SPEISEEIS MIT MILCHSÄUREBAKTERIEN ENTHALTENDE BESCHICHTUNG
OVERRUN ICE CREAM WITH COATING CONTAINING LACTIC BACTERIA

(30) Priorité: 06.09.1996 EP 96202479
(43) Date de publication de la demande: 28.07.1999
(73) Titulaire: SOCIETE DES PRODUITS NESTLE S.A., 1800 Vevey (CH)
(72) Inventeur: LESENS, Corinne, F-59260 Hellemnes (FR); DUFORT, Christian, F-60000 Beauvais (FR); PFEIFER, Andrea, M., A., CH-1806 Saint Légier (CH); ROCHAT, Florence, CH-1820 Montreux (CH)
(74) Mandataire: Archambault, Jean
(86) Numéro de dépôt international: EP9703560
(87) Numéro de publication internationale: WO9809535

(56) Documents cités:
- EP-A- 0 240 326
- EP-A- 0 462 309
- EP-A- 0 468 560
- EP-A- 0 716 810
- CH-A- 684 774
- US-A- 4 150 163
- US-A- 5 393 549
- MILCHWISSENSCHAFT, vol. 46, no. 11, 1991, MUNCHEN, pages 696-700, XP002024669

## Description

La présente invention a pour objet une nouvelle crème glacée contenant des bactéries lactiques.

### Etat de la technique

On connaît les propriétés bénéfiques sur la santé humaine de certaines bactéries lactiques, appelées couramment "bactéries probiotiques". Par exemple, EP577904 (Société des Produits Nestlé) propose de préparer des laits acidifiés avec la souche *Lactobacillus acidophilus* CNCM I-1225 qui est capable d'adhérer aux cellules intestinales, d'exclure les pathogènes de la flore intestinale et d'améliorer la réponse immunitaire à une agression externe.

Hekmat *et al*. proposent également de préparer des crèmes glacées comprenant des bactéries probiotiques (J. Dairy Science, 75, 1415-1422, 1992). Il faut noter cependant qu'une grande partie des bactéries meurent au cours du glaçage de la crème, suite au foisonnement au cours duquel on incorpore dans la crème un gaz et on la soumet à un battage mécanique intensif, et suite à la congélation de la crème à une température négative. Il y a donc un intérêt à rechercher des moyens pour augmenter la charge finale en bactéries vivantes dans la glace, le nombre de bactéries lactiques influençant en effet directement l'activité bénéfique du produit.

Par ailleurs, les crèmes glacées sont généralement constituées d'une crème foisonnée qui est enrobée par une composition qui doit bien adhérer à la crème foisonnée, ne pas exsuder d'eau, être à la fois souple et croquante, et être stable au cours du temps. Pour remplir ces besoins, la composition d'un enrobage est ainsi le plus souvent bien distincte de celle de la crème foisonnée.

US4985263 (Nestec S.A.) propose par exemple d'enrober une crème glacée avec une composition à basse teneur en graisse comprenant de l'eau, un sel d'alginate, une gomme végétale, et un peu de cacao. Malheureusement, un enrobage à basse teneur en graisse est le plus souvent relativement cassant et n'adhère pas suffisamment à la crème glacée. De plus, son goût peut ne pas satisfaire le consommateur moyen habitué aux enrobages traditionnels renfermant généralement plus de 30% à 40% de matière grasse.

WO 95/21536 (Unilever) décrit par exemple un autre procédé de préparation d'un enrobage pour crème glacée, dans lequel on enrobe une crème foisonnée par une pré-couche renfermant 43% à 46% de matière grasse, et on enrobe la crème foisonnée pré-enrobée par une couverture de composition standard, la précouche permettant d'améliorer d'adhésion de la couverture à la crème glacée.

US 4 150 163, concerne une confiserie comprenant une masse comprenant du yoghourt séché par pulvérisation à titre d'agent aromatisant comme enrobage ou comme fourrage. La survie des bactéries lactiques dans les confiseries n'est pas l'objectif de cette invention. On ne propose pas d'évaluation des bactéries lactiques viables dans le produit final et il n'y a aucune indication de la teneur en ces bactéries. En fait, l'objectif de l'antériorité est l'incorporation de poudre de yoghourt séché par pulvérisation dans le but d'obtenir un arôme de yoghourt acceptable dans les confiseries, notamment sucrées. La solution proposée est un procédé trop sévère pour préserver les bactéries lactiques à l'état viable, la poudre de yoghourt est séchée par pulvérisation, c'est à dire par traitement thermique endommageant. Cette poudre déjà endommagée est ensuite mélangée à la confiserie fondue à chaud. Les bactéries lactiques ne peuvent pas survivre aux températures proposées.

CH 684 774, concerne une masse de chocolat pour coquilles creuses de pralinés, de fourrage de truffe pour pralinés ou pour mousse au chocolat ou encore une composition pour couverture, en particulier pour l'enrobage de "têtes de nègres". Une telle masse d'enrobage contient de la poudre de yoghourt séchée par pulvérisation de manière à procurer à la confiserie des propriétés gustatives nouvelles dues à l'arôme de yoghourt. Cette masse à teneur élevée en graisse végétale, notamment en beurre de cacao subit les étapes habituelles de raffinage sur cylindre, de conchage et de tempérage. La survie des bactéries lactiques dans les confiseries n'est pas l'objectif de cette invention. En particulier, on ne propose pas d'évaluation des bactéries lactiques après entreposage.

La présente invention a pour but de pallier les inconvénients de l'art antérieur, en proposant une glace dont le contenu en bactéries lactiques est enrichi significativement au moyen d'un nouvel enrobage, ledit enrobage présentant de préférence une basse teneur en matière grasse, un goût rappelant un arôme d'origine lactique ayant une note beurrée, la capacité à adhérer à la crème glacée, la capacité à ne pas exsuder d'eau, la capacité à être stable au cours du temps, et la capacité à être à la fois souple et croquant.

### Résumé de l'invention

A cet effet, l'invention concerne une crème glacée caractérisée en ce qu'elle comprend une crème foisonnée et glacée, enrobée sur tout ou partie de sa surface extérieure par un enrobage non-foisonnée comprenant 10³ à 10⁹ cfu/g de bactéries lactiques ("cfu" provient de l'expression anglaise "Colony Forming Unit").

Un procédé de fabrication d'une crème glacée telle que définie ci-dessus.

### Description détaillée de l'invention

Dans le cadre de la présente invention, on considérera que le terme "foisonnement" recouvre le procédé traditionnel dans lequel, simultanément, on incorpore un gaz dans une crème et,on effectue un battage mécanique. Le plus souvent, la crème est également simultanément soumise à une température négative. Cependant, il est possible d'utiliser certains foisonneurs, tel un foisonneur à billes, "Mondomix" ou autres, avec lesquels la crème est aérée, battue, et la température de sortie de la crème est positive.

De même, on considérera que le terme "glaçage" recouvre le procédé traditionnel dans lequel, simultanément, on incorpore dans une crème un gaz, on effectue un battage mécanique, et on la soumet à une température négative.

La crème foisonnée et glacée peut avoir toutes les compositions choisies par l'homme du métier, pour autant qu'elle soit foisonnée à raison de 20% à 200% en volume.

De préférence cette crème comprend, après foisonnement et congélation, plus de 10⁶ cfu/g de bactéries lactiques, lesdites bactéries pouvant être choisies parmi les espèces *Lactococcus lactis,* notamment *L*. *lactis subsp*. *cremoris* et *L*. *lactis subsp*. *lactis biovar diacetylactis; Streptococcus thermophilus;* le groupes des bactéries acidophiles constitué de *Lactobacillus acidophilus, Lactobacillus crispatus, Lactobacillus amylovorous, Lactobacillus gallinarum, Lactobacillus gasseri* et *Lactobacillus johnsonii; Lactobacillus brevis; Lactobacillus fermentum; Lactobacillus plantarum; Lactobacillus helveticus; Lactobacillus casei* notamment *L. casei subsp. casei* et *L. casei subsp. rhamnosus; Lactobacillus delbruckii* notamment *L. delbruckii subsp lactis,* et *L. delbruckii subsp. bulgaricus;* les bifidobacteries notamment *Bifidobacterium infantis, Bifidobacterium breve, Bifidobacterium longum;* et enfin *Leuconostoc mesenteroides* notamment *L. mesenteroides subsp cremoris,* par exemple (Bergey's Manual of Systematic Bacteriology, vol 2, 1986; Fujisawa *et al*., Int. Syst. Bact, 42, 487-491, 1992).

Les bactéries lactiques probiotiques présentent à cet effet un intérêt particulier dans le cadre de la présente invention. Ces bactéries sont en fait capables d'adhérer aux cellules intestinales humaines, d'exclure des bactéries pathogènes sur des cellules intestinales humaines, et/ou d'agir sur le système immunitaire humain en lui permettant de réagir plus fortement à des agressions externes (capacité d'immunomodulation), par exemple en augmentant les capacités de phagocytose des granulocytes issus du sang humain (J. of Dairy Science, 78, 491-197, 1995: capacité d'immunomodulation de la souche *La-1* qui a été déposée sous le traité de Budapest à la Collection Nationale de Culture de Microoganisme (CNCM), 25 rue du docteur Roux, 75724 Paris, où elle s'est vue attribuer le numéro de dépôt CNCM I-1225).

A titre d'exemple, on peut utiliser la souche probiotique *Lactobacillus acidophilus* CNCM I-1225 décrite dans EP577904. Cette souche a été récemment reclassifiée parmi les *Lactobacillus johnsonii*, suite à la nouvelle taxonomie, proposée par Fujisawa *et al*., qui fait maintenant autorité en matière de taxonomie des lactobacilles acidophiles (Int. J. Syst. Bact., 42, 487-791, 1992). D'autres bactéries probiotiques sont également disponibles, comme celles décrites dans EP199535 (Gorbach *et al*.), US5296221 (Mitsuoka *et al*.), US556785 (Institut Pasteur), ou US5591428 (Probi AB), par exemple.

De préférence, on utilise aussi des bactéries lactiques productrices de polysaccharides texturants, comme par exemple celles décrites dans EP95201669.9 et EP96201535.0. Sans vouloir être limité par l'aspect scientifique, il semble que les polysaccharides texturants sont en effet impliqués dans la capacité de l'enrobage à adhérer à la crème glacée et à être à la fois souple et croquant.

De nombreuses méthodes sont à la disposition de l'homme du métier pour préparer une crème glacée foisonnée comprenant des bactéries lactiques vivantes. A cet effet, on peut citer les procédés décrits dans DD154424, EP438201, SU1374465, FR2423163, NL9000101, US4293573, US4308287 et US5112626.

Certains procédés de préparation sont cependant plus adaptés pour assurer un nombre important de bactéries lactiques vivantes dans la crème glacée foisonnée.

A cet effet, on peut incorporer un gaz neutre lors du foisonnement, comme du CO₂ ou de l'azote, seul ou en mélange, de manière à protéger les bactéries lactiques qui sont sensibles à l'oxygène, par exemple.

On peut aussi foisonner la crème à 130-200% en volume, puis y incorporer un lait fermenté par des bactéries lactiques pour atteindre un foisonnement final de l'ordre de 80-150% en volume, par exemple.

Afin d'assurer un nombre important de bactéries lactiques vivantes dans la crème glacée foisonnée, la température en sortie du batteur est aussi considéré comme un paramètre important. Par exemple, une crème foisonnée à environ 95% et refroidie à environ -3°C en sortie de batteur contient significativement plus de bactéries *La-1* vivantes (10⁷ cfu/g) qu'une crème foisonnée à environ 95% et refroidie à environ -6°C qui en contient environ 2 à 10 fois moins (5 à 1 x 10⁶ cfu/g). Cette différence est maintenue après durcissement de la crème glacée et après 1, 3, et 6 mois de stockage à -30°C.

Un autre intérêt incident à l'addition d'un lait fermenté au cours de la fabrication d'une crème glacée foisonnée est de développer une texture très onctueuse, très crémeuse, même si le taux de matière grasse est inférieur ou égal à 8%, et de développer un arôme d'origine lactique ayant une note beurrée. Cette texture crémeuse est maintenue, pendant plusieurs semaines, lors des tests de vieillissement accéléré (cycles successifs de températures étalés sur 24 h respectants des paliers à -10°C, -20°C et -30°C, puis à -30°C, -20°C et -10°C). La crème glacée foisonnée, contenant un lait fermenté, a aussi une très bonne résistance au test de fusion (mesure du poids de crème glacée fondue en fonction du temps, quand la crème glacée est maintenue dans une enceinte à +20°C). Par exemple, après plus de deux heures de test de fusion, seulement 40% à 50% de la crème glacée est sous forme liquide, le reste étant maintenue sous la forme d'une mousse. De plus, la taille des cristaux de glace, influençant directement le caractère « lisse » de la crème glacée, varie aussi très faiblement (environ 1 à 10 µm pour le diamètre moyen des cristaux) entre le début et la fin du vieillissement accéléré. L'intérêt de cette bonne résistance au test de fusion et, du maintien de la texture crémeuse au cours du stockage et de la faible variation de la taille des cristaux de glace au cours du vieillissement accéléré est, par exemple, de pouvoir remplir un support ingestible tel une gaufrette en forme de cône, et de former une "flamme" de l'ordre de 50 mm de hauteur, puis de pouvoir conserver cette forme en "flamme" au cours du stockage.

On enrobe ensuite, d'une manière classique, la crème glacée foisonnée avec un enrobage comprenant des bactéries lactiques sous forme fraîches, concentrées, sèches ou encapsulées, choisies parmi les espèces citées ci-dessus, par exemple.

De préférence, au moins une partie de l'enrobage a été fermentée par une ou plusieurs espèces de bactérie lactiques. En effet, plus la quantité d'une partie fermentée est importante dans l'enrobage, au plus la capacité de l'enrobage à adhérer à la crème glacée et à être souple et croquant, est augmentée. Par ailleurs, un enrobage ayant une note aromatique lactique est particulièrement attrayante.

Après avoir glacé, puis enrobé la crème glacée foisonnée, l'enrobage comprend de 10³ à 10⁹ cfu/g de bactéries lactiques, mais de préférence au moins 10⁶ cfu/g.

L'enrobage peut être réalisée classiquement par pulvérisation, trempage ou moulage, par exemple.

L'invention présente l'avantage que l'on peut enrichir une crème glacée en bactéries lactiques vivantes. En effet, les bactéries lactiques contenues dans la crème glacée subissent non seulement le foisonnement, mais aussi le passage de la température négative. Par contre, les bactéries lactiques de l'enrobage ne subissent pas le foisonnement, mais seulement la congélation. Par conséquent, l'enrobage peut comprendre un nombre plus important de bactéries lactiques, par gramme, que la crème glacée foisonnée. Le rapport (e/g) entre le nombre de bactéries lactiques dans l'enrobage (e) et le nombre de bactéries lactiques dans la crème foisonnée (g) peut être ainsi facilement supérieur à 1, de préférence supérieur à 2, par exemple.

Dans une première forme de réalisation de l'invention, l'enrobage peut être enrichi avec une composition fermentée. Cette enrobage peut ainsi comprendre 1% à 70% d'un lait fermenté par les bactéries lactiques, 0,5% à 5% de protéines animales ou végétales, et un taux de matières grasse de 2% à 20%, lesdites matières grasses pouvant être d'origine lactique, ledit lait fermenté comprenant généralement 10⁴-10⁹ cfu/g de bactéries lactiques, et lesdites protéines pouvant être des protéines du jaune d'oeuf ou du sérum du lait, par exemple. On peut noter qu'il n'est pas nécessaire d'ajouter des composés riches en matière grasse, végétale ou non, de façon à obtenir des taux de matière grasse proches de 40%, car la texture en bouche de l'enrobage congelé selon l'invention rappelle en effet celle d'un enrobage congelé traditionnel ayant de 40% à 50% en matière grasse végétale, par exemple.

Dans une deuxième forme de réalisation de l'invention, l'enrobage peut avoir été directement fermenté en totalité. Pour cela, on prépare une composition comprenant au moins 1% à 70% d'un lait, 0,5% à 5% de protéines animales ou végétales et un taux de matière grasse de 2% à 20%, et on fermente cette composition jusqu'au moins 10⁶ cfu/g. A titre d'indication, le lait peut être un lait qui est reconstitué à partir d'une poudre ou d'un concentré de lait entier ou écrémé, par exemple.

Dans une troisième forme de réalisation de l'invention, l'enrobage peut être simplement enrichi avec des bactéries lactiques sous forme concentrées (par centrifugation d'un milieu de culture et récupération du culot), sèches (par lyophilisation ou par pulvérisation sous un flux d'air chaud) ou encapsulées (voir ci-dessous).

L'enrobage peut avoir un pouvoir sucrant de 5 à 35 (valeur relative équivalente au saccharose) obtenu avec des sucres ou des édulcorants, comme le glucose, le fructose, le saccharose, le lactose, les sucres invertis et/ou l'aspartame, par exemple. Par ailleurs, l'enrobage peut comprendre 0,1% à 10% d'un polysaccharide, pouvant être hydrolysé ou modifié, comme les amidons, les pectines, les dextranes, les gommes telles que le xanthane, et les alginates, par exemple. Des stabilités remarquables de l'enrobage, à des cycles de congélation-décongélation, sont obtenus si l'on utilise en particulier un amidon acétylé, par exemple acétylé de l'ordre de 1% à 3%, ou un amidon hydrolysé ayant un taux en équivalant de dextrose de l'ordre de 15 à 25, par exemple.

Une crème glacée répondant parfaitement aux conditions énoncées ci-dessus peut ainsi comprendre une partie crème glacée foisonnée comprenant plus de 10⁶ cfu/g de bactéries lactiques, et une partie enrobage comprenant plus de 5x10⁶ cfu/g de bactéries lactiques, 0,1% à 10% d'un amidon acétylé, 1% à 60% d'un lait, 0,5% à 5% de protéines animales ou végétales, un taux de saccharose de 15% à 30% et un taux de matière grasse lactique de 2% à 20%, par exemple. Les meilleures résultats sont de plus obtenus avec la souche *Lactobacillus acidophilus* CNCM I-1225 et/ou les souches *Streptococcus thermophilus* CNCM I-1421 et CNCM I-1424 (déposées à l'Institut Pasteur, 25 rue du Docteur Roux, Paris, le 18.05.1994).

Par ailleurs, l'enrobage peut comprendre en outre des fibres qui ne seront pas ou peu digérés dans l'estomac et le tractus intestinal, mais qui sont néanmoins spécifiquement fermentescibles par les bactéries lactiques mentionnées ci-dessus, permettant ainsi de restaurer ou de promouvoir une flore adaptée en bactéries lactiques bénéfiques pour la santé humaine.

Ces fibres peuvent être de nature protéique ou saccharidique choisies, par exemple, parmi les pectines végétales, les chito-, fructo-, gentio-, galacto-, isomalto-, manno- ou xylo-oligosaccharides ou les oligosaccharide de soja, par exemple (Playne et al., Bulletin of the IDF 313, Group B42, Annual Session of September 95, Vienna).

Les pectines préférées sont des polymères d'acide α-1,4-D-galacturonique ayant un poids moléculaire de l'ordre de 10 à 400 kDa, que l'on peut purifier des carottes ou des tomates, par exemple (JP60164432). Les galacto-oligosaccharides préférés comprennent une partie saccharidique constituée 2 à 5 unités répétitives de la structure [-α-D-Glu-(1→4)-β-D-Gal-(1→6)-] (Yakult Honsa Co., Japon). Les fructo-oligosaccharides préférés sont des inulin-oligofructose extraits de la chicorée pouvant comprendre, par exemple, 1-9 unités répétitives de la structure [-β-D-Fru-(1→2)-β-D-Fru-(1→2)-] (WO94/12541; Raffinerie Tirlemontoise S.A., Belgique), ou des oligosaccharides synthétisés à partir d'unités saccharose pouvant comprendre, par exemple, une partie saccharidique constituée de 2 à 9 unités répétitives de la structure [-α-D-Glu-(1→2)-β-D-Fru-(1→2)-] (Meiji Seika Kasiha Co., Japon). Les malto-oligosaccharides préférés comprennent une partie saccharidique constituée de 2 à 7 unités répétitives de la structure [-α-D-Gal-(1→4)-] (Nihon Shokuhin Kako Co., Japon). Les isomaltose préférés comprennent une partie saccharidique constituée de 2 à 6 unités répétitives de la structure [-α-D-Glu-(1→6)-] (Showa Sangyo Co., Japon). Les gentio-oligosaccharides préférés comprennent une partie saccharidique constituée de 2 à 5 unités répétitives de la structure [-β-D-Glu-(1→6)-] (Nihon Shokuhin Kako Co., Japon). Enfin, les xylo-oligosaccharides préférés comprennent une partie saccharidique constituée de 2 à 9 unités répétitives de la structure [-β-xyl-(1→4)-] (Suntory Co., Japon), par exemple.

La quantité de fibres dépend de la capacité de celles-ci à promouvoir le développement des bactéries lactiques. En règle générale, l'enrobage peut contenir de 0,1 à 20% de telles fibres (en poids sur la matière sèche), notamment au moins 10³ cfu de bactéries lactiques par g de fibres, de préférence 10⁴ à 10⁷ cfu/g de fibres. Par ailleurs, la crème glacée peut être conçue de sorte à pouvoir fournir potentiellement jusqu'à un maximum 10 g de fibres par dessert. Des quantités supérieures en fibres induisent en effet une sensation de lourdeur désagréable dans l'estomac (Bouhnik *et al*., Cah. Nutr. Diét., 6, 418-422, 1991; Ito et al., Microb. Ecol. Health Dis., 3, 285-292, 1990).

De préférence, les bactéries lactiques ne sont pas en contact substantiel avec les fibres, ce qui évite un début de fermentation intempestif des fibres lors de la préparation du dessert (quand la crème glacée est fermentée), ou lors de sa conservation due en particulier aux problèmes de variation de la température de stockage durant les périodes estivales.

A cet effet, on a trouvé que la micro-encapsulation des bactéries présente des avantages techniques et thérapeutiques indéniables. Premièrement, la micro-encapsulation augmente significativement la survie des bactéries lactiques, et donc le nombre de bactéries lactiques vivantes qui arrivent dans l'intestin. Deuxièmement, ces bactéries ne sont pas libérées dans l'enrobage lorsque celui-ci est soumis à une température telle que l'on observe normalement un début de fermentation. Encore plus important, les bactéries lactiques sont graduellement relâchées dans l'intestin, ce qui permet une action prolongée des bactéries lactiques sur la santé humaine.

De préférence, pour encapsuler les bactéries lactiques, on sèche les bactéries lactiques par lyophilisation ou par pulvérisation (EP96201922.0), et on les incorpore dans un gel formé, par exemple, par un acide gras solidifié, un alginate de sodium, de l'hydroxypropylmethylcellulose polymérisé ou du polyvinypyrrolidone polymérisé.

De même, il a été observé que la concentration en fibres dans l'intestin retarde le transit intestinal des fibres, ce qui influence positivement le développement des bactéries lactiques dans l'intestin. En d'autres termes, moins les fibres sont concentrées dans la crème glacée selon l'invention, par exemple en les mélangeant uniquement avec la crème foisonnée, moins bon est le développement bactérien dans l'intestin. Le fait de concentrer les fibres sous la forme d'un enrobage permet ainsi de potentialiser l'effet bénéfique des bactéries lactiques sur la santé humaine.

Enfin, un autre problème incident résolu par la présente invention réside dans le fait que certaines fibres sont très facilement dégradées par un pH acide, notamment par le pH d'une crème fermentée par des bactéries lactiques. Dans la mesure où l'enrobage a été simplement enrichi par un lait fermenté (enrobage non fermenté en totalité), ou par des bactéries lactiques concentrées, sèches ou encapsulées, le pH de l'enrobage présente ainsi l'avantage de ne pas être supérieur à 5.

Pour obtenir une crème glacée dont les caractéristiques techniques et gustatives répondent parfaitement aux besoins de la présente invention, il n'est pas nécessaire que les bactéries lactiques soient encore toutes vivantes, et ceci sans que le goût de l'enrobage final ou de ses propriétés d'adhérence et de souplesse soient altérés, bien que la présence de bactéries vivantes confère en fait un avantage réel pour la santé du consommateur.

La présente invention est décrite plus en détail dans les exemples présentés ci-après. Les pourcentages sont donnés en poids sauf indication contraire. Les souches utilisées, uniquement à titre d'exemple, *Lactobacillus johnsonii La-1, Bifidobacterium longum BI16*, *Streptococcus thermophilus Sfi9* et *Sfi21*, ont été déposées sous le traité de Budapest à la Collection Nationale de Culture de Microoganisme (CNCM), 25 rue du docteur Roux, 75724 Paris, France, respectivement le 30 juin 1992 (*La-1*, *Bl16*) et le 18 mai 1994 (*Sfi9*, *Sfi21*), et se sont vues attribuer respectivement les numéros de dépôt CNCM I-1225, CNCM I-1228, CNCM I-1421 et CNCM I-1424. sont vues attribuer respectivement les numéros de dépôt CNCM I-1225, CNCM I-1228, CNCM I-1421 et CNCM I-1424.

### Exemple 1 Crème glacée foisonnée comprenant une addition de lait fermenté

Dans cet exemple, la source de lait fermenté est un lait acidifié, vendu en France sous la marque LC¹®"nature" (Société des Produits Nestlé, France), comprenant environ 10⁷ cfu/ml de la souche probiotique *Lactobacillus acidophilus* CNCM I-1225 (ci-après dénommée *La-1*, et environ 10⁸ cfu/ml de chaque souche texturante *Streptococcus thermophilus Sfi9* et *Sfi21*. Tout autre lait fermenté, pasteurisé ou non, peut être aussi additionné à la base crème glacée, à raison de +1% à 50%, ou à la base d'enrobage, à raison de 1 à 70%, par exemple.

On prépare une base concentrée pour crème glacée, en mélangeant à 60-65°C pendant 20 min, environ 11% de graisses lactiques, 8,8% de solides de lait (non gras), 25% saccharose, 5% de sirop de glucose et 0,6% d'Emulstab® SE30.On homogénéise la base à 72-75°C et à 210 bars (2 étages à 210/50 bars), on la pasteurise à 85C pendant 22 sec (pasteurisateur APV, France, Evreux, 400 l/h), on la refroidit à 4°C, et on y ajoute 40% de lait commercial acidifié LC¹®. La composition de cette base concentrée est présentée dans le tableau 1 ci-dessous.

**Tableau 1**

| Ingrédients | Composition (kg) | Graisses (%) | Matières sèches non grasses (%) | Saccharose (%) | Extrait sec (%) |
|---|---|---|---|---|---|
| Crème (35%) | 31,43 | 11,00 | 1.57 | | 12,57 |
| Poudre de lait écrémé | 7,60 | | 7,30 | | 7,30 |
| Saccharose | 36,77 | | | 25,00 | 25,00 |
| Sirop de glucose | 5,27 | | | | 5,00 |
| Emulstab SE30 | 0,67 | | | | 0,63 |
| Eau | 18,26 | | | | |
| Total: base crème | 100,00 | 11,00 | 8,87 | 25,00 | 50,50 |
| Base crème (60%) | 60,00 | 6.60 | 5.32 | 15,00 | 30,30 |
| LC¹® (40%) | 40,00 | 1,40 | 4,68 | - | 6,08 |
| Total: crème + LC¹® | 100,00 | 8,00 | 10,00 | 15,00 | 36,38 |

Après maturation de la base pendant 12h à 4°C, on la glace à un degré de foisonnement de 95% en volume (glaceur Crepaco, France, Evreux; 160 l. de produit/h), puis on enrobe tout ou partie de la crème foisonnée selon les méthodes décrites ci-dessous, et avec les différentes compositions d'enrobage décrites dans les exemples 3 à 5 ci-après.

Pour préparer un bâtonnet moulé, on utilise la technique classique de remplissage "shell and core". A cet effet, l'enrobage selon l'exemple 3 est dosé dans un moule, ledit moule étant dans un bain à eau glycollée à -35°C. Après 30 s, l'enrobage non congelé est aspiré. Seul l'enrobage congelé reste dans le moule, pour former une coque. La crème glacée foisonnée à 95%, sortie du glaceur à -3°C est alors dosée dans cette coque. Après 30 min. D'attente, le bâtonnet est démoulé. Il est ensuite pulvérisé avec de l'eau de source, emballé, placé pendant 3 heures en chambre de durcissement à -40°C, puis stocké en chambre à -30°C.

Pour préparer un bâtonnet extrudé, on extrude la crème glacée foisonnée à 95%, sortie à -5°C/-6°C du glaceur, avec un extrudeur ayant une tête d'extrusion ayant une forme souhaitée. Le bâtonnet extrudé est ensuite congelé en tunnel de congélation à -45°C. Le bâtonnet est alors enrobé par trempage dans la composition décrite selon l'exemple 4. Il est ensuite pulvérisé avec de l'eau de source, emballé, placé pendant 3 heures en chambre de durcissement à environ -40°C, puis stocké en chambre à -30°C.

Pour préparer un pot de crème glacée, on extrude la crème glacée foisonnée à 95%, sortie à -5°C/-6°C du glaceur, avec un extrudeur ayant une tête d'extrusion à la forme souhaitée, dans des pots 12 cl. Par dosage, le décor, dont la composition est décrite dans l'exemple 5 ci-après, est déposé à la surface de la crème glacée foisonnée. Le pot est placé, pendant 3 heures, en chambre de durcissement à environ -40°C, puis il est stocké en chambre à -30°C.

Après durcissement, on détermine le nombre de bactéries vivantes dans la crème foisonnée et dans l'enrobage, par étalement de dilutions d'échantillons sur un milieu MRS-agar (DE Man *et al*., 1960) supplémenté d'un antibiotique et par numération du nombre de colonies de *La-1* s'y développant.

Les résultats montrent que la population de *La-1*, après durcissement, dans la crème glacée foisonnée en pots, est de l'ordre de 2 x 10⁶ cfu par gramme. La population de bactéries lactiques fluctue relativement peu lors d'un stockage de la crème glacée pendant plusieurs mois à des températures de congélation. Par exemple, après 6 mois de conservation à -30°C, le nombre de bactéries dans la partie crème glacée foisonnée en pots est d'environ 1 x 10⁶ cfu/g.

Les résultats montrent que la population de *La-1*, après durcissement, dans la crème glacée foisonnée extrudée ou moulée sous la forme de bâtonnets, est de l'ordre de 1,3 x 10⁶ cfu par gramme. Quand le bâtonnet de crème glacée foisonnée est enrobé (moulage ou trempage), la population bactérienne sur le produit total est alors de l'ordre de 8,6 x 10⁶ cfu par gramme. L'enrobage permet donc, dans ce cas, d'enrichir la crème glacée foisonnée en bactéries lactiques.

On soumet également les bâtonnets glacés et les pots, à des cycles successifs de températures étalés sur 24h, respectants des paliers à -10°C, -20°C et -30°C, puis à -30°C, -20°C, et -10°C. La crème glacée est alors soumise à un vieillissement accéléré. On analyse ensuite la survie des bactéries au cours du temps. Dans les crèmes glacées en pots, on observe uniquement un faible déclin, de l'ordre de 18%, du nombre de bactéries lactiques après 3 mois de vieillissement accéléré. Des résultats similaires sont observés pour les bâtonnets glacés.

La capacité de l'enrobage à adhérer à la crème glacée, et à être souple et croquant est évaluée par un panel de dégustateurs. Lors des dégustations, le bâtonnet ayant subi les cycles successifs de températures, pendant 1, 2, 3 ou 4 mois, est comparé à un bâtonnet témoin fraîchement stocké à -30°C. Les résultats montrent que pour les bâtonnets enrobés avec les couvertures décrites dans les exemples 3 et 4, aucune altération, concernant l'adhérence, la souplesse et le croquant n'est observée par le panel de dégustateurs après 1 mois de vieillissement accéléré. Pour comparaison, un bâtonnet enrobé avec une couverture chocolat contenant 40% à 60% de matière grasse végétale ne subit aucune altération, au cours d'un tel vieillissement accéléré.

### Exemple 2 Crème glacée foisonnée et fermentée

On prépare une crème comprenant 10,8% de graisses lactiques, 13,5% de solides de lait (non gras), 0,3% d'Emulstab® SE30, et 0,3% d'Emulstab® mousse (Grindsted, DK), on la pasteurise à 105°C pendant 20 s, on l'homogénéise à 75°C et 300 bars, on la refroidit à 38°C, et on l'inocule avec des précultures en milieu MRS, prises en phase exponentielle de croissance, à raison de 5% en poids d'une préculture de *La-1*, et 0,5% en poids d'une préculture de la souche *Streptococcus thermophilus Sfi21*. On fermente ensuite la crème pendant 10h à 38°C jusqu'à un pH d'environ 4,5. A la fin de la fermentation, on y ajoute du saccharose et un sirop de glucose. La composition de la crème est présentée dans le tableau 2 ci-après.

Le mélange est ensuite brassé, refroidi à 4°C, conservé à 4°C, glacée à un degré de foisonnement de 95% en volume (glaceur Crepaco, France; 160 l. de produit/h), puis enrobé, tout ou partie, selon les méthodes décrites à l'exemple 1, et avec les différentes compositions d'enrobage décrites dans les exemples 3 à 5 ci-après.

Après durcissement, le nombre de bactéries vivantes dans les crèmes glacées foisonnées est de l'ordre de 7 x 10⁶ cfu/g, et après 3 mois de conservation à -30°C de l'ordre de 6 x 10⁶ cfu/g.

Dans les bâtonnets glacés et enrobés, on observe également un enrichissement de la population bactérienne sur le produit total. Quand le bâtonnet de crème glacée foisonnée est enrobé par moulage ou trempage, la population bactérienne sur le produit total est alors de l'ordre de 10⁷ cfu par gramme, après 6 mois de stockage. L'enrobage permet donc, dans ce cas aussi, d'enrichir la crème glacée foisonnée en bactéries lactiques.

Les bâtonnets glacés et les pots soumis à un vieillissement accéléré comme décrit à l'exemple 1, survivent particulièrement bien, puisque moins de 50% des bactéries lactiques meurent.

La capacité de l'enrobage à adhérer à la crème glacée, et à être souple et croquant est également évalué par un panel de dégustateurs, selon la méthode décrite à l'exemple 1. Les résultats montrent que pour les bâtonnets enrobés avec les couvertures décrites dans les exemples 3 et 4 après 1 mois de vieillissement accéléré, aucune altération, concernant l'adhérence, la souplesse et le croquant n'est observée par le panel de dégustateurs.

**Tableau 2**

| Ingrédients | Composition (kg) | Graisses (%) | Matières sèches non grasses (%) | Saccharose (%) | Extrait sec (%) |
|---|---|---|---|---|---|
| Crème (35%) | 30,83 | 10,79 | 1,54 | | 12,33 |
| Poudre de lait écrémé | 12,45 | | 11,95 | | 11,95 |
| Emulstab® SE30 | 0,41 | | | | 0,37 |
| Emulstab® mousse | 0.41 | | | | 0,36 |
| Eau | 55,91 | | | | |
| Total: base crème | 100,00 | 10,79 | 13,49 | - | 25,01 |
| Base crème | 74.14 | 8.00 | 10,00 | - | 18,54 |
| Saccharose | 22,06 | | | 15.00 | 15,00 |
| Sirop de glucose | 3,80 | | | | 3,00 |
| Crème glacée fermentée | 100,00 | 8,00 | 10,00 | 15,00 | 36,54 |

### Exemple 3 Crème de base sans oeuf pour enrobage de type "shell and core"

Cet exemple reprend au tableau 3 la composition de la crème de base non foisonnée sans oeuf pour enrobage de type "shell and core", utilisée pour enrober les crèmes glacées foisonnées moulées décrites aux exemples 1 et 2. Dans cet exemple, le lait fermenté LC¹® a été additionné à raison de 40% dans la base. Tout autre lait fermenté pourrait être utilisé à raison de 1 à 70%.

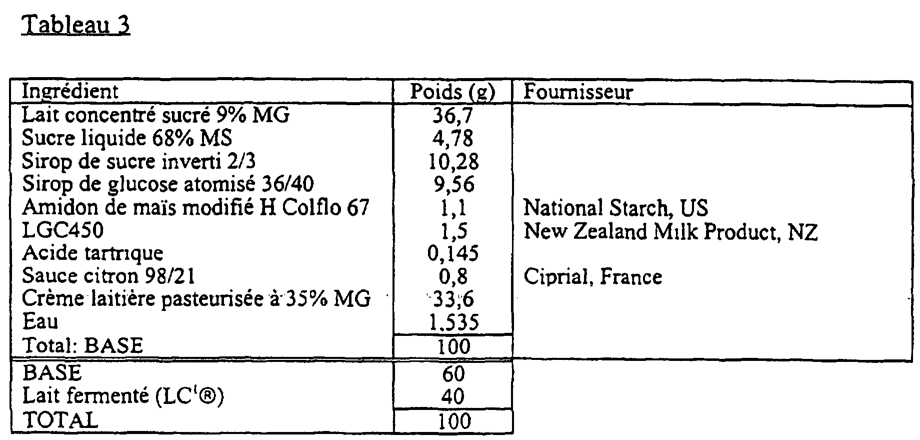

### Exemple 4 Crème de base sans oeuf pour enrobage de type "trempage"

Cet exemple reprend au tableau 4 la composition de la crème de base non foisonnée sans oeuf pour enrobage de type "trempage", utilisée pour enrober les crèmes glacées foisonnées extrudées décrites aux exemples 1 et 2. Dans cet exemple le lait fermenté LC¹® a été additionné à raison de 40% dans la base. Tout autre lait fermenté pourrait être aussi utilisé à raison de 1 à 70%.

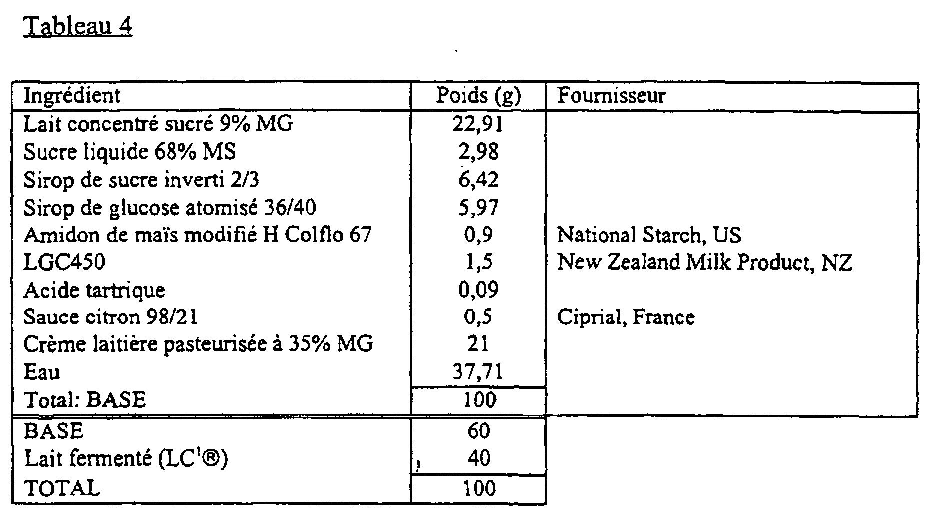

### Exemple 5 Crème de base pour décor sur une crème glacée en pot

Cet exemple reprend au Tableau 5, la composition de la crème de base non foisonnée avec oeuf pour décor, utilisé pour décorer les crèmes glacées foisonnées extrudées en pots décrites aux exemples 1 et 2. Dans cet exemple le lait fermenté LC¹® a été additionné à raison de 40% dans la base. Tout autre lait fermenté pourrait être utilisé à raison de 1 à 70%.

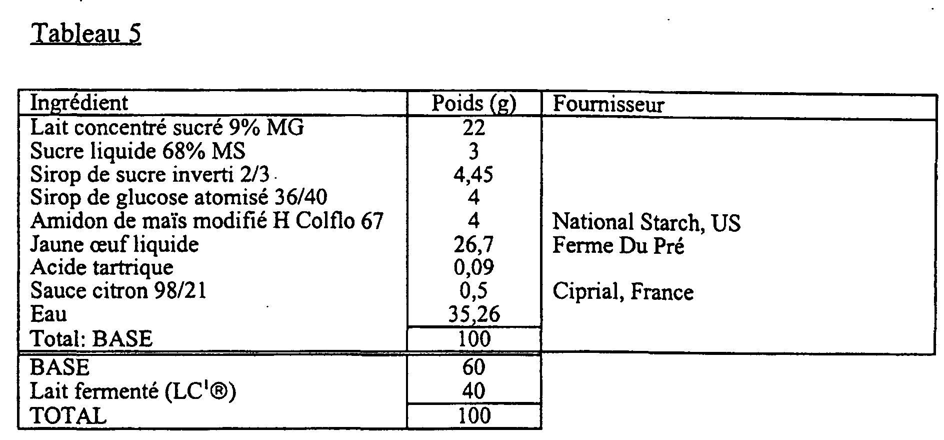

### Exemple 6 Encapsulation de bactéries lactiques

Dans une cuve de 100 l, on prépare 80 l de milieu de culture présentant la composition suivante: 0,25% d'extrait de levure, 1,00% de trypticase, 0,50% de phytone, 1,5% de glucose, 0,05% de L-cysteine HC1, 0,25% de K2HPO4, 0,025% de ZnSO4, des traces de FeC13, et le reste d'eau.

On inocule avec 1 l d'une culture de 20 h de *Bifidobacterium longum B116*. On incube le milieu pendant 12 h à 30°C. On centrifuge le bouillon de culture et l'on récolte 240 g de cellules. On les dilue dans 250 ml de lait écrémé additionné de 7% de lactose. On congèle le mélange à l'azote liquide. On lyophilise à 40°C pendant une nuit. On prépare une dispersion à 5% de la poudre obtenue dans de la graisse végétale hydrogénée présentant un point de fusion de 42°C et liquéfiée à 45°C. On injecte la dispersion à 45°C sous une pression de 4 bars, en même temps que de l'azote liquide, à raison de 1 partie de dispersion pour 5 parties d'azote, au sommet d'un cylindre vertical de 1,5m de diamètre et 10 m de hauteur. Au fond du cylindre est placé un récipient contenant de l'azote liquide dans lequel on recueille des microbilles renfermant des bifidobactéries dont le diamètre oscille entre 0,1 mm et 0,5 mm. On met ensuite les microbilles en lit fluidifié et l'on pulvérise sur le lit une solution alcoolique à 8% de zéine, en quantité telle que la couche de zéine formée autour des microbilles représente 5% de leur poids.

Les microbilles sont ensuite incorporées à la composition d'enrobage "shell and core" décrite au tableau 5 ci-dessus, de sorte à obtenir environ 10⁷ cfu par gramme. Puis la crème glacée décrite à l'exemple 2 est enrobée avec cette composition.

### Exemple 7 Enrobage à base de fibres et de bactéries lactiques

On prépare la base concentrée décrite à l'exemple 1, et on y ajoute 40% d'un lait fermenté par les souches *Lactobacillus johnsonii La-1* (10⁷ cfu/ml) et *Bifidobacterium longum BI16* (10⁷ cfu/ml). Après maturation de la crème pendant 12h à 4°C, on la glace à un degré de foisonnement de 95% en volume (glaceur Crepaco, France, Evreux; 160 l. de produit/h), puis on enrobe tout ou partie de la crème foisonnée avec les deux différentes compositions d'enrobage décrites ci-après.

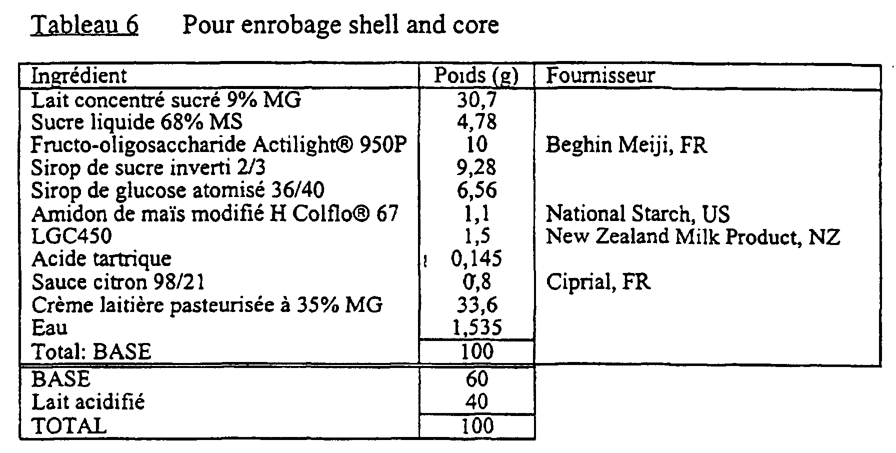

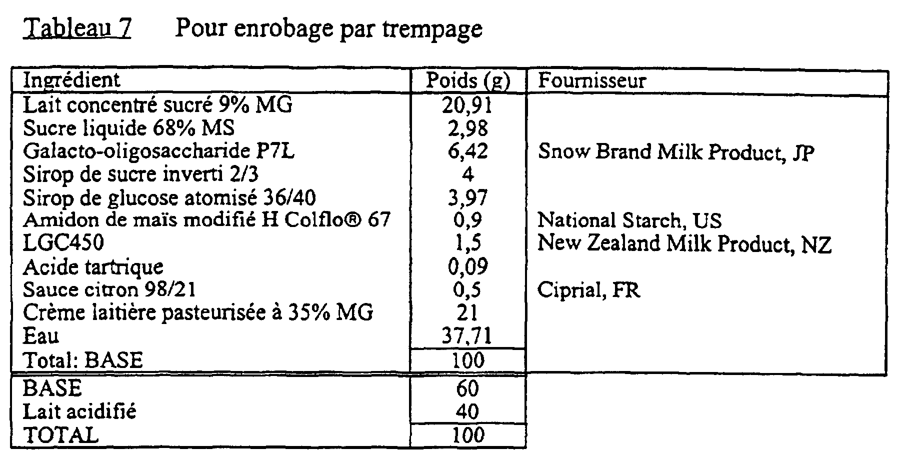

Après durcissement, on détermine le nombre de bactéries vivantes dans les crèmes foisonnées et dans les enrobages. Les résultats sont comparables à ceux présentés à l'exemple 1.

Enfin, la capacité des bâtonnets enrobés à promouvoir le développement des bactéries lactiques *La-1* et *Bl16* dans l'intestin est également mis en évidence, en déterminant le nombre de *La-1* et *Bl16* résidant dans les fèces après plusieurs jours suivant une consommation régulière d'environ 200 ml, soit environ 100g, de crèmes glacées par jour, et cela au regard d'une diète dépourvue en fibres.

## Revendications

1. Crème glacée **caractérisée en ce qu'**elle comprend une crème foisonnée et glacée, enrobée sur tout ou partie de sa surface extérieure par un enrobage non-foisonné comprenant 10³ à 10⁹ cfu/g de bactéries lactiques.

2. Crème glacée selon la revendication 1, **caractérisée en ce que** la crème foisonnée comprend plus de 10⁶ cfu/g de bactéries lactiques, le rapport (e/g) entre le nombre de bactéries lactiques dans l'enrobage (e) et le nombre de bactéries lactiques dans la crème foisonnée (g) étant supérieur à 1.

3. Crème glacée selon la revendication 1, **caractérisée en ce que** l'enrobage comprend 1% à 70% d'un lait fermenté par des bactéries lactiques, 0,5% à 5% de protéines animales ou végétales, et un taux de matière grasse lactique de 2% à 20%.

4. Crème glacée selon la revendication 3, **caractérisée en ce que** l'enrobage comprend en outre 0,1% à 10% d'un polysaccharide hydrolysé ou modifié.

5. Crème glacée selon la revendication 4, **caractérisée en ce que** le polysaccharide modifié est un amidon acétylé, et **en ce que** le polysaccharide hydrolysé est un amidon ayant un taux en équivalent de dextrose de l'ordre de 15 à 25.

6. Crème glacée selon la revendication 1, **caractérisée en ce que** la crème foisonnée comprend plus de 10⁶ cfu/g de bactéries lactiques, et que l'enrobage comprend plus de 5x 10⁶ cfu/g de bactéries lactiques, 0,1% à 10% d'un amidon acétylé, 1% à 60% d'un lait, 0,5% à 5% de protéines animales ou végétales, et un taux de matière grasse de 2% à 20%.

7. Crème glacée selon la revendication 1, **caractérisée en ce que** l'enrobage comprend des fibres fermentescibles favorisant spécifiquement la croissance dans le tractus intestinal des bactéries lactiques contenues initialement dans l'enrobage.

8. Crème glacée selon la revendication 7, **caractérisé en ce que** les fibres sont choisies parmi les pectines, les fructo-, galacto-, gentio-, chito-, isomalto-, manno- ou xylo-oligosaccharides ou les oligosaccharides de soja.

9. Crème glacée selon l'une quelconque des revendications 1 à 8, **caractérisée en ce qu'**elle comprend la souche *Lactobacillus acidophilus* CNCM I-1225.

10. Crème glacée selon l'une quelconque des revendications 1 à 8, **caractérisée en ce que** les bactéries lactiques contenues dans l'enrobage sont ajoutées sous forme concentrée, sèche ou encapsulée.

11. Crème glacée selon l'une quelconque des revendications 1 à 8, **caractérisée en ce qu'**elle comprend des bactéries lactiques choisies parmi les bactéries lactiques probiotiques et les bactéries lactiques productrices de polysaccharides texturants.

12. Procédé de fabrication d'une crème glacée foisonnée contenant un nombre important de bactéries lactiques vivantes selon l'une des revendications précédentes, **caractérisé par le fait que** la température en sortie du glaceur est environ -3° C.

## Claims

1. Ice cream, **characterized in that** it comprises a core of aerated ice cream, coated over all or part of its outer surface with a non-aerated coating comprising 10³ to 10⁹ cfu/g of lactic acid bacteria.

2. Ice cream according to Claim 1, **characterized in that** the aerated ice cream comprises more than 10⁶ cfu/g of lactic acid bacteria, the ratio (e/g) between the number of lactic acid bacteria in the coating (e) and the number of lactic acid bacteria in the overrun cream (g) being greater than 1.

3. Ice cream according to Claim 1, **characterized in that** the coating comprises 1% to 70% of a milk fermented by lactic acid bacteria, 0.5% to 5% of animal or vegetable proteins and a milk fat content of from 2% to 20%.

4. Ice cream according to Claim 3, **characterized in that** the coating also comprises 0.1% to 10% of a hydrolysed or modified polysaccharide.

5. Ice cream according to Claim 4, **characterized in that** the modified polysaccharide is an acetylated starch, and **in that** the hydrolysed polysaccharide is a starch having a dextrose equivalent content of about 15 to 25.

6. Ice cream according to Claim 1, **characterized in that** the overrun cream comprises more than 10⁶ cfu/g of lactic acid bacteria and **in that** the coating comprises more than 5 × 10⁶ cfu/g of lactic acid bacteria, 0.1% to 10% of an acetylated starch, 1% to 60% of a milk, 0.5% to 5% of animal or vegetable proteins and a fat content of from 2% to 20%.

7. Ice cream according to Claim 1, **characterized in that** the coating comprises fermentable fibres which specifically promote growth, in the intestinal tract, of the lactic acid bacteria initially contained in the coating.

8. Ice cream according to Claim 7, **characterized in that** the fibres are chosen from pectins, fructo-, galacto-, gentio-, chito-, isomalto-, manno- or xylo-oligosaccharides and soybean oligosaccharides.

9. Ice cream according to any one of Claims 1 to 8, **characterized in that** it comprises the strain *Lactobacillus acidophilus* CNCM I-1225.

10. Ice cream according to any one of Claims 1 to 8, **characterized in that** the lactic acid bacteria contained in the coating are added in concentrated, dry or encapsulated form.

11. Ice cream according to any one of Claims 1 to 8, **characterized in that** it comprises lactic acid bacteria chosen from probiotic lactic acid bacteria and lactic acid bacteria that produce texturing polysaccharides.

12. Process for manufacturing an overrun ice cream containing a large number of live lactic acid bacteria according to one of the preceding claims, **characterized in that** the temperature at the outlet of the freezing machine is about -3°C.

## Patentansprüche

1. Eiskonfekt, **dadurch gekennzeichnet, dass** es aus einer expandierten Eiskrem besteht, die auf ihrer Außenfläche ganz oder teilweise mit einem nicht expandierten Überzug umhüllt ist, der 10³ bis 10⁹ KBE/g Milchsäurebakterien enthält.

2. Eiskonfekt nach Anspruch 1, **dadurch gekennzeichnet, dass** die expandierte Eiskrem mehr als 10⁶ KBE/g Milchsäurebakterien enthält, wobei das Verhältnis (e/g) zwischen der Anzahl von Milchsäurebakterien in dem Überzug (e) und der Anzahl von Milchsäurebakterien in der expandierten Eiskrem (g) größer als 1 ist.

3. Eiskonfekt nach Anspruch 1, **dadurch gekennzeichnet, dass** der Überzug 1% bis 70% durch Milchsäurebakterien fermentierte Milch, 0,5% bis 5% tierische oder pflanzliche Proteine und einen Milchfettgehalt von 2% bis 20% besitzt.

4. Eiskonfekt nach Anspruch 3, **dadurch gekennzeichnet, dass** der Überzug außerdem 0,1% bis 10% eines hydrolysierten oder modifizierten Polysaccharids enthält.

5. Eiskonfekt nach Anspruch 4, **dadurch gekennzeichnet, dass** das modifizierte Polysaccharid acetylierte Stärke ist und dass das hydrolysierte Polysaccharid Stärke mit einem Gehalt an Dextroseäquivalent von etwa 15 bis 25 ist.

6. Eiskonfekt nach Anspruch 1, **dadurch gekennzeichnet, dass** die expandierte Eiskreme mehr als 10⁶ KBE/g Milchsäurebakterien besitzt und dass der Überzug mehr als 5 x 10⁶ KBE/g Milchsäurebakterien, 0,1% bis 10% acetylierte Stärke, 1% bis 60% Milch, 0,5% bis 5% tierische oder pflanzliche Proteine und einen Fettgehalt von 2% bis 20% besitzt.

7. Eiskonfekt nach Anspruch 1, **dadurch gekennzeichnet, dass** der Überzug fermentierbare Fasern enthält, die das Wachstum der ursprünglich im Überzug enthaltenen Milchsäurebakterien im Darmtrakt spezifisch begünstigen.

8. Eiskonfekt nach Anspruch 7, **dadurch gekennzeichnet, dass** die Fasern aus Pectinen, Fructo-, Galacto-, Gentio-, Chito-, Isomalto-, Manno- oder Xylo-Oligosacchariden oder Sojaoligosacchariden ausgewählt sind.

9. Eiskonfekt nach einem der Ansprüche 1 bis 8, **dadurch gekennzeichnet, dass** es den Stamm *Lactobacillus acidophilus* CNCM I-1225 enthält.

10. Eiskonfekt nach einem der Ansprüche 1 bis 8, **dadurch gekennzeichnet, dass** die im Überzug enthaltenen Milchsäurebakterien in konzentrierter, getrockneter oder verkapselter Form zugegeben werden.

11. Eiskonfekt nach einem der Ansprüche 1 bis 8, **dadurch gekennzeichnet, dass** es Milchsäurebakterien enthält, die aus probiotischen Milchsäurebakterien und texturierende Polysaccharide erzeugenden Milchsäurebakterien ausgewählt sind.

12. Verfahren zur Herstellung von expandierter Eiskrem, das eine große Anzahl von lebenden Milchsäurebakterien enthält, nach einem der vorhergehenden Ansprüche, **dadurch gekennzeichnet, dass** die Temperatur am Austritt der Gefriermaschine etwa -3°C beträgt.
